# EUROPÄISCHE PATENTSCHRIFT

(11) **EP 1 102 201 B1**
(45) Veröffentlichungstag und Bekanntmachung des Hinweises auf die Patenterteilung: **03.01.2007**
(21) Anmeldenummer: 00124002.7
(22) Anmeldetag: 04.11.2000
(51) Int. Cl.: G06K 7/00, G06K 13/08

(54) **Kartenleser**
Card reader
Lecteur de cartes

(30) Priorität: 17.11.1999 DE 19955299
(43) Veröffentlichungstag der Anmeldung: 23.05.2001
(73) Patentinhaber: ddm hopt + schuler GmbH & Co. KG, D-78628 Rottweil (DE)
(72) Erfinder: Hopt, Jürgen, 78628 Rottweil (DE); Storz, Michael, 78467 Konstanz (DE)
(74) Vertreter: Kohler Schmid Möbus

(56) Entgegenhaltungen:
- EP-A- 0 773 510
- DE-C- 19 545 502
- DE-U- 9 114 527
- FR-A- 2 768 531

## Beschreibung

Die Erfindung betrifft einen Kartenleser mit einem in die Kartenbahn eingreifenden Schieber, der die Karte in eine Halteposition führt, und mit einer einen Elektromagneten aufweisenden Halteeinrichtung, die den Schieber in der Halteposition zurückhält.

Ein derartiger Kartenleser ist beispielsweise durch die EP-A-0 773 510 bekannt geworden.

Der aus EP-A-0 773 510 bekannte Kartenleser umfasst einen in die Kartenbahn eingreifenden Schieber, der die Karte in eine Halteposition führt, und eine einen Elektromagneten aufweisende Halteeinrichtung, die den Schieber in der Halteposition zurückhält. In der Halteposition hintergreift ein Schwenkteil mit einem Haken eine Kante des Schiebers, der dadurch entgegen der Karteneinführrichtung verriegelt ist. Die Schwenkbewegung des Schwenkteils wird mithilfe des Elektromagneten ausgelöst, dessen Stößel im umgepolten Magnetfeld hin und her verschoben wird. Zum Entriegeln des Schiebers wird der Elektromagnet bestromt, und das Schwenkteil gibt den Schieber frei. Im Falle eines Stromausfalls kann der Elektromagnet nicht bestromt werden, so dass der Schieber verriegelt bleibt und eine eingeführte Karte nicht aus dem Kartenleser ausgegeben werden kann.

Weiterhin ist aus DE 195 45 502 C ein Kartenschieber bekannt, der in seiner Halteposition durch eine flexible Rastzunge verriegelt ist. Ein Mechanismus zum Entriegeln des verriegelten Kartenschiebers, d.h. zum Entrasten der flexiblen Zunge, wird durch einen Betätigungsschieber ausgelöst, der in seiner eingedrückten Position durch einen Haftmagneten gehalten ist. Erst wenn der Haftmagnet entregt und dadurch der Betätigungsschieber freigegeben wird, ist eine Entriegelung, d.h. das Entrasten der flexiblen Zunge, möglich.

Weiterhin ist aus der DE-U 298 20 068.6 ein Kartenleser bekannt, in dem eine Karte mit ihrem Kontaktfeld während der Einführbewegung auf federnde Kontakte des Kartenlesers abgesenkt wird, um in einer Halteposition den Datenaustausch zwischen Kartenleser und Karte zu ermöglichen. Das Absenken der Karte erfolgt mittels eines Schiebers, der in den starren Seitenwänden des Kartenlesers vorgesehenen Absenkführungen geführt ist und von der Karte, diese absenkend, beim Einführen mitgenommen wird. Die starren Seitenwände sind im Kartenleser seitlich der Kartenbahn vorgesehen, so daß sie auch der seitlichen Führung der Karte beim Einführen dienen. Am Schieber ist ein Verriegelungshaken vorgesehen, der in der Halteposition von einem verschwenkbar gelagerten Verriegelungsarm verriegelnd hintergriffen wird, wodurch auch die Karte in der Halteposition zurückgehalten ist. Zum Lösen der Verriegelung wird ein Motor angesteuert, der den Verriegelungsarm aus seinem Wirkbereich mit dem Verriegelungshaken verschwenkt, so daß die Karte zur Ausgabe aus dem Kartenleser freigegeben ist. Im Falle eines Stromausfalls kann der Motor allerdings nicht mehr aktiviert werden, so daß die eingeführte Karte im Kartenleser zurückgehalten bleibt.

Es ist daher die Aufgabe der Erfindung, einen Kartenleser der eingangs genannten Art derart weiterzubilden, daß auch im Falle eines Stromausfalls die Ausgabe einer eingeführten Karte aus dem Kartenleser sichergestellt werden kann.

Diese Aufgabe wird erfindungsgemäß dadurch gelöst, daß am Schieber ein Anker aus ferromagnetischem Material vorgesehen ist und daß der Schieber durch das auf den Anker wirkende Magnetfeld des bestromten Elektromagneten in der Halteposition zurückgehalten ist.

Der mit der Erfindung erzielte Vorteil besteht darin, daß im Falle eines Stromausfalls der Elektromagnet nicht mehr bestromt wird und dadurch die Karte nicht mehr in ihrer Halteposition zurückgehalten wird. Wenn die Karte gegen die Wirkung einer Feder in die Halteposition eingeführt wird, springt beim Abschalten des Elektromagneten die Karte, von der vorgespannten Feder angetrieben, aus dem Kartenleser heraus. Am Schieber kann eine Lanze befestigt sein, die an ihrem den Schieber in Einführrichtung überragenden Ende den Anker trägt. Alternativ kann auch die gesamte Lanze oder der gesamte Schieber aus ferromagnetischem Material gebildet sein.

Vorzugsweise ist mindestens ein Endschalter für die Halteposition der Karte und/oder des Schiebers vorgesehen, um den Elektromagneten spätestens in der Halteposition der Karte zu aktivieren.

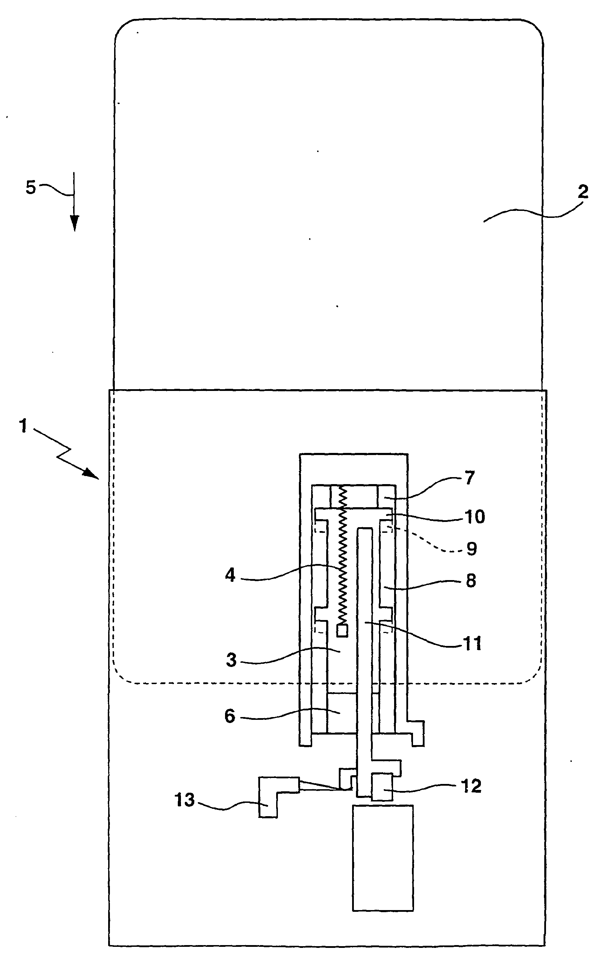

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die einzige Figur zeigt schematisch eine Draufsicht auf einen erfindungsgemäßen Kartenleser **1**, in den eine einen integrierten Schaltkreis tragende Karte **2** mittels eines Schiebers **3** gegen die Kraft einer Feder **4** in Einführrichtung **5** bis in die dargestellte Halteposition eingeführt wird. In dieser Halteposition ist die Karte 2 auf federnde Kontakte (nicht dargestellt) des Kartenlesers 1 abgesenkt, so daß über ein Kontaktfeld auf der Karte 2 ein Datenaustausch zwischen Kartenleser 1 und Karte 2 stattfinden kann.

Der Schieber 3 ist in einer Aussparung **6** eines die Kartenbahn entgegen der Einführrichtung 5 frei übergreifenden Armes **7** seitlich geführt. Dazu sind an den beiden Seitenwänden **8** der Aussparung 6 Absenkführungen **9** vorgesehen, die in Einführrichtung 5 schräg zur Kartenbahn verlaufen und in denen Führungselemente **10** des Schiebers 3 geführt sind. Beim Einführen der Karte 2 senkt der Schieber 3, von der Karte 2 in Einführrichtung 5 mitgenommen, die Karte 2 auf die Kontakte des Kartenlesers 1 ab. Der Schieber 3 zusammen mit dem Arm 7 bildet auch das Gegenlager für die Karte 2, wenn diese in der Halteposition die federnden Kontakte des Kartenlesers 1 gegen deren Federkraft herunterdrückt. Der Arm 7 ist nur einseitig, nämlich an seinem in Einführrichtung 5 hinteren Ende, gehäuseseitig befestigt, wodurch er federnd gelagert ist. Auf dem Schieber 3 ist eine Lanze **11** befestigt, die an ihrem den Schieber 3 in Einführrichtung 5 überragenden Ende einen Anker **12** aus ferromagnetischem Material trägt.

In der Halteposition der Karte 2 ist durch die Lanze 11 ein Endschalter **13** betätigt, wodurch ein Elektromagnet **14** bestromt wird. Dessen auf den Anker 12 wirkendes Magnetfeld hält den Schieber 3 und damit die Karte 2 in ihrer Halteposition zurück. Wenn der Datenaustausch mit der Karte 2 beendet ist, oder im Falle eines Stromausfalls ist der Elektromagnet nicht mehr bestromt, und die Kraft der vorgespannten Feder 4 reicht aus, um die Karte 2 aus ihrer Halteposition zurück in eine Entnahmeposition zu bewegen.

## Patentansprüche

1. Kartenleser (1) mit einem in die Kartenbahn eingreifenden Schieber (3), der die Karte (2) in eine Halteposition führt, und mit einer einen Elektromagneten (14) aufweisenden Halteeinrichtung, die den Schieber (3) in der Halteposition zurückhält,
**dadurch gekennzeichnet,**
**dass** am Schieber (3) ein Anker (12) aus ferromagnetischem Material vorgesehen ist und dass der Schieber (3) durch das auf den Anker (12) wirkende Magnetfeld des bestromten Elektromagrieten (14) in der Halteposition zurückgehalten ist.

2. Kartenleser nach Anspruch 1, **dadurch gekennzeichnet, dass** der gesamte Schieber (3) aus ferromagnetischem Material gebildet ist.

3. Kartenleser nach Anspruch 1 oder 2, **gekennzeichnet durch** mindestens einen Endschalter (13) für die Halteposition der Karte (2) und/oder des Schiebers (3).

4. Kartenleser nach einem der vorhergehenden Ansprüche,
**dadurch gekennzeichnet, dass** der Schieber (3) durch das Magnetfeld des bestromten Elektromagneten (14) gegen die Wirkung einer Feder (4) in der Halteposition zurückgehalten ist.

## Claims

1. Card reader (1) comprising a slider (3) which engages in the card path and guides the card (2) into a holding position, and a holding means having an electromagnet (14) for retaining the slider (3) in the holding position, **characterized in that** an armature (12) of ferromagnetic material is provided on the slider (3), the slider (3) being retained in the holding position by the magnetic field, acting on the armature (12), of the electromagnet (14) which is fed with current.

2. Card reader according to claim 1, **characterized in that** the whole slider (3) is formed from ferromagnetic material.

3. Card reader according to claim 1 or 2, **characterized by** at least one limit switch (13) for the holding position of the card (2) and/or the slider (3).

4. Card reader according to any one of the preceding claims, **characterized in that** the slider (3) is retained, against the action of a spring (4), in the holding position by the magnetic field of the electromagnet (14) which is fed with current.

## Revendications

1. Lecteur de cartes (1) avec un coulisseau (3) s'engageant dans le parcours de la carte qui guide la carte (2) dans une position d'arrêt, et avec un dispositif d'arrêt présentant un électroaimant (14) qui retient le coulisseau (3) dans la position d'arrêt,
**caractérisé par le fait**
**qu'**il est prévu un induit (12) en matériau ferromagnétique sur le coulisseau (3) et que le coulisseau (3) est retenu dans la position d'arrêt par le champ magnétique de l'électroaimant (14) alimenté en énergie qui agit sur l'induit (12).

2. Lecteur de cartes selon la revendication 1, **caractérisé par le fait que** tout le coulisseau (3) est formé de matériau ferromagnétique.

3. Lecteur de cartes selon la revendication 1 ou 2, **caractérisé par** au moins un contact de fin de course (13) pour la position d'arrêt de la carte (2) et/ou du coulisseau (3).

4. Lecteur de cartes selon l'une des revendications précédentes, **caractérisé par le fait que** le coulisseau (3) est retenu dans la position d'arrêt par le champ magnétique de l'électroaimant (14) alimenté en énergie contre l'action d'un ressort (4).
